# EUROPEAN PATENT SPECIFICATION

(11) **EP 1 858 696 B1**
(45) Date of publication and mention of the grant of the patent: **29.11.2017**
(21) Application number: 05784263.5
(22) Date of filing: 07.03.2005
(51) Int. Cl.: B32B 17/10, B32B 18/00, B32B 27/12, C08L 77/00, B32B 5/16, D04H 3/00

(54) **THERMOPLASTIC NYLON ADHESIVE MATRIX HAVING A UNIFORM THICKNESS AND COMPOSITE LAMINATES FORMED THEREFROM**
THERMOPLASTISCHE POLYAMIDKLEBSTOFFMATRIX MIT EINER GLEICHFÖRMIGEN DICKE UND DARAUS HERGESTELLTE VERBUNDLAMINATE
MATRICE ADHESIVE THERMOPLASTIQUE EN NYLON PRESENTANT UNE EPAISSEUR UNIFORME ET LAMINES COMPOSITES FORMES A PARTIR DE CELLE-CI

(43) Date of publication of application: 28.11.2007
(73) Proprietor: Spunfab, Ltd., Cuyahoga Falls, OH 44223 (US)
(72) Inventor: Keuchel, Kenneth, Cuyahoga Falls, OH 44223 (US); Keuchel, Herbert, Cuyahoga Falls, OH 44223 (US)
(74) Representative: Schweitzer, Klaus
(86) International application number: PCT/US2005/007364
(87) International publication number: WO 2006/096170

(56) References cited:
- EP-A1- 1 175 998
- US-A- 4 861 654
- US-A1- 2004 126 523
- US-A1- 2004 126 523
- US-B1- 6 429 157
- US-B1- 6 503 856

## Description

### BACKGROUND OF THE INVENTION

### Field of the Invention

The present invention relates to a composite laminate formed from a polymeric adhesive matrix. All of these matrices are produced from a thermoplastic, low moisture-absorbing nylon polymer and blends thereof with one or more other low moisture-absorbing thermoplastic polymers. The subject polymeric adhesive matrix finds particular utility in forming a multi-layer composite laminate comprising of inorganic or organic reinforcing fibers, such as carbon or glass fibers. Such a multi-layer laminate includes a composite comprising one or more layers of the polymeric adhesive matrix comprising a low moisture absorbing nylon polymer, a compatible organic binder resin such as an epoxy resin, and a reinforcing fiber matrix, such as a carbon fiber fabric or glass mat. Such multi-layer composites may be used, for example, in fabricating aircraft bodies and parts, boat hulls and parts, and automotive bodies and parts.

### Description of the Prior Art

Reinforced thermoplastic and thermoset materials have wide application in, for example, the aerospace, boating, automotive, industrial/chemical, and sporting goods industries. One or more thermosetting resins are impregnated into the reinforcing fibrous material before curing, while the resins are still low in viscosity. Thermoplastic materials are normally more difficult to impregnate into the reinforcing material because they usually exhibit higher viscosity. Such fiber-reinforced materials that are manufactured by first impregnating the fiber-reinforced material with a suitable resin are referred to as "prepregs". Two or more prepregs are then normally consolidated to form a multi-layer composite laminate.

Consolidation of the prepregs is usually necessary to remove voids that normally result from the limited ability of the impregnating binder resin to displace air in the reinforcing fiber bundle, tow, roving or web, during the process used to impregnate the fibers with the binder resin. The impregnated layers of prepregs are usually consolidated using heat and pressure, or heat and vacuum, such as by vacuum bag molding and compacting in an autoclave. The consolidation step has generally required the application of very high pressure or vacuum at a very high temperature, for relatively long periods of time. Alternatively, the prepreged fiber matrix may be chopped or pelletized and then used in a molding or extrusion process, with or without other polymeric materials or reinforcements, to provide reinforced molded or extruded articles.

Thermoplastic binder resin compositions have been heated, slurried, commingled, or diluted with solvents, plasticizers or other low molecular weight materials, to reduce the viscosity of the binder resin composition before it is used to impregnate the reinforcing fibrous material. These methods have suffered from serious drawbacks, such as significant additional process costs, particularly with a low weight basis carbon fiber matrix, and the need to dispose of the diluent.

In the case of heating the thermoplastic binder resin composition to a temperature at which its viscosity is low enough for satisfactorily impregnating the reinforcing fibers, the dwell time of the resin in the heating zone often results in degradation of the binder resin. In addition, the molecular weight of the thermoplastic binder resin may need to be kept lower than desired in order to facilitate the impregnation step. Finally, as previously noted, processes for impregnating a thermoplastic binder resin into a reinforcing fiber matrix have required time consuming consolidation of the prepregs at high temperature and pressure, in order to maximize physical strength and other physical properties and to minimize outgassing during the subsequent finishing processes. Outgassing during consolidation normally results in voids within the composite laminate and frequently causes microcracking or premature delamination. Outgassing during a coating step tends to cause pin-holing or popping in the substrate or coating, resulting in an uneven surface. U.S. Patent 6,656,316 proposes a method for addressing some of these problems by heating the reinforcing fiber matrix to a temperature above the melting temperature of the reinforcing binder resin to facilitate consolidation and minimize voids.

One method proposed to lower the costs for producing a prepreg useful for providing high strength composite laminates is to stitch the multi-layer prepreg laminate with a thread, to thereby consolidate the laminate (See U.S. Patent 6,599,610). Alternatively, it has also been proposed to needle the prepreg laminate to accomplish similar results (See U.S. Patent 5,740,593). The mechanical action of stitching or needling reinforcing fibers, especially those having a high modulus, will break a fairly large portion of these high modulus fibers because they are relatively brittle.

In the process of layering fibers for the production of composite laminate structures, it is often necessary to pre-bond the layers of fibers in a preferred orientation, such as a random orientation. A lightweight layer of a thermal adhesive web can be used to hold the fibers together and heat can be applied to fix the reinforcing fibers in place.

United States Patent No. 6,503,856 discloses carbon fiber sheets including an adhesive polymeric material adhered directly onto one or more surfaces of the carbon fiber network. The adhesive material may be in the form of a fibrous web, a microporous film or a discontinuous pattern of adhesive. The adhesive layer is preferably formed of an adhesive material that is capable of being formed into a fibrous structure, but can be either a thermoplastic or a thermoset adhesive. Adhesives disclosed and preferred are polyolefins, particularly amorphous polypropylene. For optimum results, the carbon fiber layers disclosed further include one or more additional layers to sandwich the adhesive layer between the additional layer and the carbon fiber network. The additional layer is preferably a scrim material formed from a thermoplastic polymer coated yarn, such as a polyolefin coated glass yarn or mesh.

After the heating and fixing of the reinforcing fiber laminate, it is common to use a relatively low viscosity organic binder resin to impregnate and flow through the laminate structure. Curing of the binder resin provides a stable, high strength, rigid or semi-rigid prepreg in which the reinforcing fibers are embedded. An example of such a stable prepreg is disclosed in U.S. Patent 6,475,596. The prepreg carbon fiber plies may be fabrics, tapes or nonwoven webs that have been pre-impregnated with a thermosetting or other polymeric resin. The carbon fiber layer is preferably a woven fabric formed primarily or entirely from high modulus, reinforcing fibers. Curing of this laminate is typically carried out in a high temperature, high-pressure environment, such as an autoclave.

U.S. Patent 6,524,690 discloses a method for producing a prepreg material having substantially no voids. A thermosetting or thermoplastic resin is impregnated into the reinforcing fibrous material before curing, while such a resinous material still has a relatively low viscosity. Fiber-reinforced materials, such as those formed from carbon fibers or glass fibers, are usually manufactured from a fibrous reinforcing material with a curable binder resin, to form a prepreg. Two or more prepregs are usually then consolidated into a laminate. As previously described, consolidation is then necessary to remove voids that result from the inability of the curable binder resin to fully displace air from the reinforcing fiber matrix during the impregnation of the fiber matrix with the binder resin. The individually impregnated layers of such prepregs are then usually consolidated using a process that normally requires very high pressure or vacuum at a high temperature for a relatively long period of time. As previously set forth, outgassing during this consolidation may also cause voids within the composite laminate, which frequently causes microcracking or premature delamination. This patent discloses a method for substantially eliminating such voids by heating the reinforcing fibrous material to a temperature above the melting point, softening point or glass transition temperature of the impregnating curable resin.

The fabrication of high performance, organic matrix structures for aircraft and aerospace applications has typically been very costly. A major factor in these high costs has been the expense of purchasing and installing autoclaves and hardening apparatus that are normally required for the fabrication of large, composite-based components. There are currently two proposed approaches to avoiding autoclaving. These are: 1) a low temperature curable impregnating resin and 2) electron beam curing of the impregnating resin. For low temperature processing, the prepreg, impregnating binder resin and adhesive layer must all be conducive to low temperature/low pressure processing. The alternative approach of using electron beam curing is rapid, but requires a high-energy electron beam source that requires expensive measures for protecting personnel.

One approach to providing such low temperature processing is proposed in U.S. Patent 6,642,347. A novel amine-terminated hyperbranched quinoxaline polymer precipitate is produced to initiate bis-maleimide polymerization and to increase the toughness (impact resistance) of thermoset resins, such as a bis-maleimide or an epoxy.

An article in Composite Science and Technology, 56 (1996), p. 1223-1240, entitled **MODE II FRACTURE OF COMPOSITES INTERLAYERED WITH NYLON PARTICLES,** describes the use of unmodified Nylon 12 particles between the plies of a multi-layer carbon fiber/epoxy resin composite. On page 1239, it is stated that during post-cure of the composite, temperatures above the melting point of the Nylon 12 were reached and that, therefore, the nylon 12 particles melted and later re-solidified. While it was found to be difficult to determine the effect of this on the properties and behavior of the particles, it was noted that many particles formed voids in their interiors, as shown by either SEM or TEM studies.

### SUMMARY OF THE INVENTION

In the manufacture of a nylon polymer, end groups are used to terminate the polymer chain during the polymerization process. In producing such polyamides or co-polyamides, carboxyl groups (-COOH) are typically used to terminate the end groups of the amide polymer chain. In such polyamides, the carboxyl termination group is not as reactive as an amine (-NH₃) group. Mixing the polyamide reaction mixture with an amine or coating the polymeric matrix with an amine, such as Air Products Amicure® amine, Huntsman Jeffamine® amine or Cognis Versamid® polyamide (a moderately low viscosity resin based on dimerized fatty acids and polyamines) are methods whereby the carboxyl groups can be replaced with amine groups. This provides more amine end groups that are more reactive with the organic binder resin, especially at lower temperatures, such as an epoxy resin.

### Mechanism: Simplified Epoxy-Amine Reaction

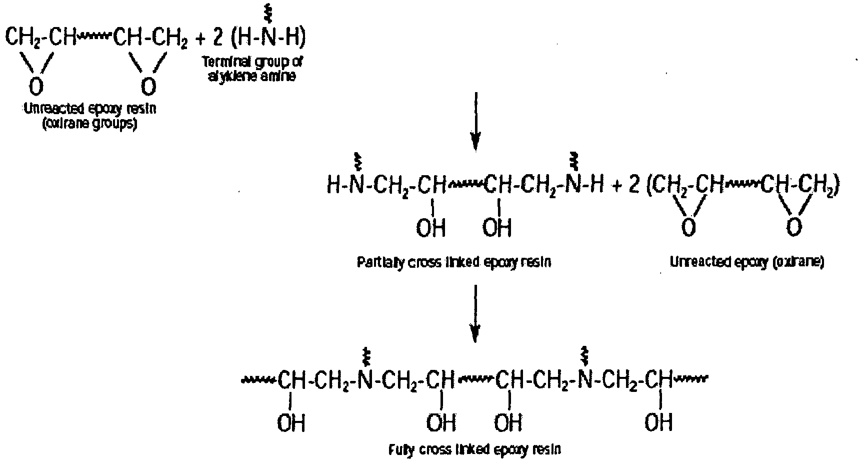

### Mechanism: Reaction of Carboxylic Acid with Amine

**HOOC(CH₂)_{R}COOH + H₂N(CH₂)_{R'}NH₂**

**salt**

[⁻**OOC(CH₂)_{R}COO⁻] + [H₃N⁺(CH₂)_{R'}⁺NH₃]**

**heat, -H₂O**

--[-**CO**(**CH₂**)**_{R}CO**-**HN**(**CH₂**)**_{R}NH**-**CO**(**CH₂**)**_{R}CO**-**NH**(**CH₂**)**_{R}HN**--]--

The polymeric adhesive matrices comprise a substantially uniform nonwoven web comprising a amine-terminated Nylon 12 or amine-terminated Nylon 11 polymer, or blends thereof, with up to 40 weight percent of another compatible thermoplastic polymeric material. In addition, the amine-terminated Nylon 12 or Nylon 11 can be copolymerized with another compatible, low moisture absorbing polymer, prior to extrusion. Examples of such compatible materials are Nylon 6,10, Nylon 6 or Nylon 6,6. Both amine-terminated and unmodified Nylon 12 and Nylon 11 have substantially low moisture absorbance and relatively low melt viscosity.

A process is provided for producing a multi-layer composite laminate comprising providing at least one layer of a substantially uniform thickness polymeric adhesive matrix positioned between a plurality of reinforcing fibrous layers, preferably the polymeric adhesive matrix is a fibrous or non-fibrous nonwoven web.

The subject polymeric adhesive matrix is a fibrous or non-fibrous nonwoven web. This type of adhesive web matrix is usually not easy to manufacture because of its relatively high static properties. This nylon web may, therefore, be produced using a rotational fiber extrusion process, similar to the process described in U.S. Patent 4,898,634.

Rotational fabric extrusion (RFE) produces a continuous filament self-bonded thermoplastic adhesive web having a preferred fiber alignment across the machine direction (MD) of the fabric whereby the fibers traverse the entire width of the fabric. In a composite structure, the continuous filaments traverse across the alignment axis of the reinforcing fibers. Continuous filaments in the cross machine direction (XD) versus the alignment of the reinforcing fibers in the machine direction make the least contact with the reinforcing fibers. Therefore, only a small portion of fibers, comprising the polymeric adhesive web, are buried within the MD-aligned reinforcing fiber bundles during the consolidation process. This substantially decreases the tendency in the final composite for cracking and forming microvoids. It also offers a very low resistance to the penetration into the composite laminate of matrix filler and binders, such as an epoxy resin.

The composite laminate of the present invention comprises a Nylon 12 or Nylon 11 polymeric adhesive web matrix and inorganic or organic reinforcing fibers that are impregnated with a cross-linking binder resin, such as an epoxy resin, for added stiffness and impact strength. Such reinforcing fibers may include carbon, graphite, ceramic, glass, Kevlar® fibers, Nomex® fibers or other reinforcing fibers. The Nylon 12 and/or Nylon 11-based adhesive web matrix is based on an amine-terminated Nylon 12 or Nylon 11 polymer system, for improving reactivity with the crosslinking binder resin.

To greatly improve the impact and cracking properties of an inorganic composite laminate structure, one or more layers of an amine-terminated Nylon 12 or Nylon 11-based polymeric adhesive nonwoven web are positioned between two or more layers of reinforcing inorganic or organic fibers. The total composite laminate, made up of the the adhesive nonwoven web and a reinforcing fiber composite, is then processed to provide infusion of the crosslinking binder resin into the fibrous network of the reinforcing fibers. The nonwoven web facilitates this infusion and, it is believed, substantially diminishes the propagation of cracks when the final composite laminate structure is subjected to stress over a long period of time.

It has previously been found that the plastic zone of epoxy sandwiched between two layers of reinforcing fibers has an optimum thickness, resulting in increased fracture toughness. If this plastic zone is too thin the plastic zone is overly constrained, too thick and a fracture can go around the plastic zone. In order to improve the overall performance of multilayer composite structures, the thickness of the gap between the layers of reinforcement is, therefore, important. This uniform gap can be achieved by the incorporation of the subject uniform thickness polymeric adhesive matrix, such as a nonwoven web, in the interfacial gap between the layers of reinforcing fibers in a composite laminate. In the present invention, a polymeric adhesive matrix having a thickness of 10 to 150 microns (micrometers) is preferred.

A substantially uniform thickness matrix layer in the gap between the reinforcing fiber layers allows this distance to be maintained. The matrix layer thickness must be substantially uniform to maintain the optimum gap spacing. Selection of the type of matrix is then important and the one yielding the highest levels of uniformity is produced by rotational fiber extrusion, as previously discussed. The orbital distribution and the traversing of the filaments occurs continuously across the width dimension without the agglomeration of filaments, as is the case in melt blowing, spunbonding, carding, foam attenuation and direct spray spinning. In the case of a nonwoven web as the polymeric adhesive matrix, the web can be further optimized for thickness by post nipping (calendaring) it after web formation to a preferred gapped size (thickness), to yield the highest level of thickness uniformity. This optimization of thickness yields increased fracture toughness. The density of the fibrous structure of the nonwoven web can also play an important roll in decreasing the crack propagation within the interfacial layers by absorbing and redirecting crack energy in different directions. Therefore, it is preferred to provide an adhesive nonwoven web having a basis weight of from 0.1 to 1.5 ounces per square yard (osy), preferably from 0.1 to 1.0 osy.

As previously discussed, the polymeric adhesive matrix of the present invention, when it is a nonwoven web, may first be calendared to increase the coverage uniformity and thickness consistency of the web. While a three-dimensional structure is still maintained after such calendaring, this also somewhat flattens the polymeric matrix, enabling it to cover more area and may add to the uniformity of distribution of the polymer matrix between the layers of the composite laminate, resulting in more consistent strength and crack resistance performance. In another embodiment, the polymeric adhesive matrix is an engineered nonwoven web comprising both a higher melting web component and a lower melting web component. The objective of the lower melting component is to melt and bond the loose assembly of reinforcing fibers, whereas the higher melting component does not melt during bonding and provides the stress-bearing component of the pre-laminate. This provides an engineered fabric wherein one component is predominantly a stress-bearing element and the other functions predominantly as an adhesive.

The present invention relates to a multi-layer laminate comprising at least one substantially uniform thickness matrix comprising Nylon 12 or Nylon 11, which may be a fibrous or non-fibrous adhesive polymeric matrix layer positioned between a plurality of reinforcing fibrous substrates (layers). The polymeric adhesive matrix comprises an amine-terminated Nylon 12 or amine-terminated Nylon 11, or mixtures thereof with at least one other compatible low moisture-absorbing thermoplastic polymer. The polymeric matrix is preferably a fibrous or non-fibrous web, having a substantially uniform thickness. The preferred fiber web is produced by a process that provides a self bonded nonwoven fiber matrix comprised of continuous filaments traversing the width of the fabric. This fibrous web adhesive matrix may be formed using any of a number of melt extrusion processes, such as melt blowing, carding, foam attenuation, direct spray spinning or a spunbonding process. The polymer adhesive matrix may also be produced by a process comprising providing continuous filaments across the width of the reinforcing fibers. The fibrous or non-fibrous matrix is formed from a low moisture-absorbing thermoplastic nylon material, wherein the polymeric nylon material is amine-terminated Nylon 12 and/or amine-terminated Nylon 11, or a blend of one or more of such polymers with one or more other compatible low moisture-absorbing polymers.

The multi-layer composite laminate of the present invention is preferably subjected to a molding cycle prior to curing the binder resin. This enables the composite laminate to be formed in any manner to enable the production of shaped articles, such as those that are useful for aircraft, automotive or boat components and parts.

### BRIEF DESCRIPTION OF THE DRAWINGS

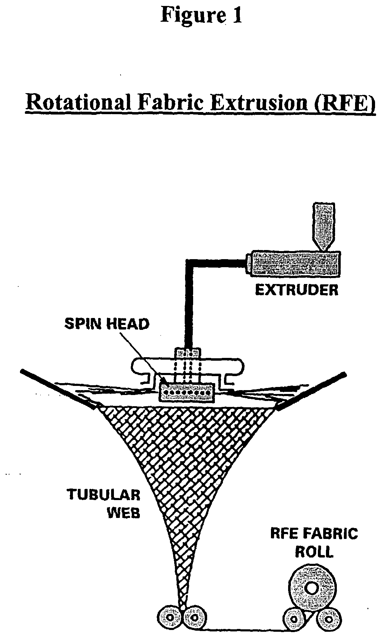

Figure 1 describes the RFE process wherein a thermoplastic is fed from an extruder through a circular spin head to provide a nonwoven web that is then fed between two nip rolls and collected on an RFE fabric roll.

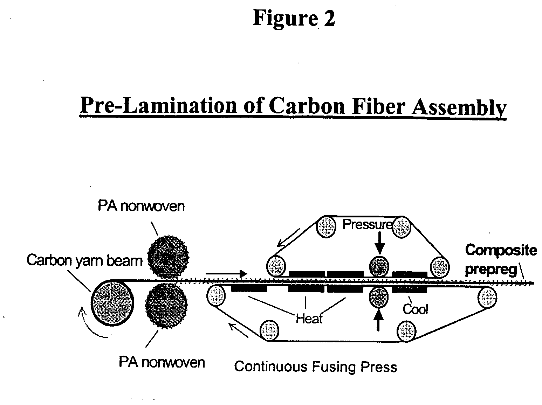

Figure 2 sets forth an apparatus for the pre-lamination of a carbon fiber assembly. A carbon fiber beam process is described wherein a nonwoven web is applied to both sides of a carbon fiber assembly that is fed from a beam. A nonwoven web is fed from two separate rolls to contact both sides of the carbon fiber assembly. Heat and pressure are applied to this pre-laminate and the pre-laminate is then cooled and a carbon fiber prepreg results.

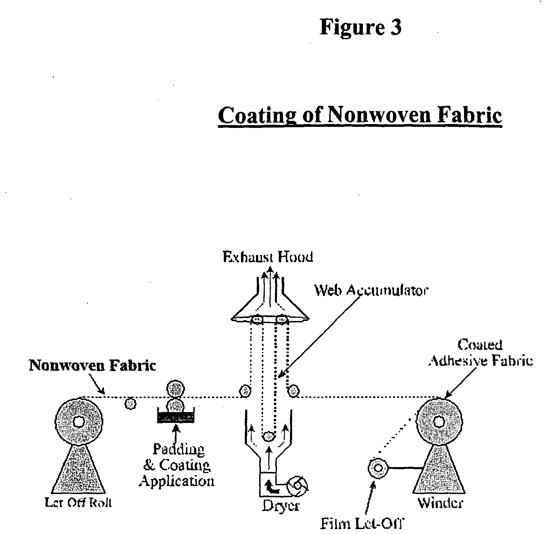

Figure 3 shows the padding (coating) of a polymeric adhesive nonwoven web (fabric) of the present invention. The nonwoven fabric is fed from let-off roll to a padding and coating apparatus where an amine modifier is coated onto the surface of the nonwoven web. The coated web is fed into an exhaust hood and a dryer, and onto a web accumulator. The coated nonwoven web is then fed onto a winder over a film that is fed from a film let-off roll.

### DESCRIPTION OF THE PREFERRED EMBODIMENTS

The polymeric adhesive matrix utilized in the present invention is formed from a thermoplastic, low moisture-absorbing nylon polymer or low moisture-absorbing nylon polymer blend. In the process of laying reinforcing fibers for the manufacture of composites it is sometimes necessary to pre-bond the layers of fibers in a preferred orientation or a random orientation. A lightweight layer of a thermal adhesive matrix can be used to hold the fibers together and moderate heat can be applied to fix the reinforcing fibers in place. After the heating and fixing of the combined composite matrix, it is common to use a binder resin to flow through the reinforcing fiber matrix and to cure the matrix to form a rigid or semi-rigid phase that the reinforcing fibers are embedded in.

In order to enhance the bond between the binder resin phase and the polymeric adhesive matrix phase the polymeric adhesive matrix phase resin is modified to provide better compatibility with the binder resin phase and in some cases can react to become a part of the resin. In this way the final performance properties of the composite structure of binder resin, reinforcing fibers and polymeric adhesive matrix may be enhanced, thereby improving properties such as through the reinforcing fibers to provide the resulting composite laminate with good fracture toughness, stiffness, flexural strength and reduced crack propagation.

In the process of making nylons, end groups are usually used to terminate the polymer chain during polymerization. In many polyamides and co-polyamides, carboxyl groups (-COOH) are typically used to terminate the end groups of the polymer chain. This termination group is not as reactive as an amine (-NH₃) end group. By mixing an amine product like Cognis Versamid® polyamide, which is a moderately low viscosity resin based on dimerized fatty acids and polyamines, with the carboxylic acid terminated polyamide, the carboxyl groups are substantially replaced with.the amine group. This provides end groups that are more reactive for reaction with the epoxy binder resin.

In another embodiment, the surface of the polymeric adhesive matrix is modified by coating the polymeric matrix with the amine end group modifier. In another embodiment, the amine-modified resin of the polymeric adhesive matrix is coated on the carbon fibers to enhance affinity between the binder resin and the polymeric adhesive matrix, such as the fibers of a nonwoven web. Other embodiments include providing a powder or particles of the amine-modified adhesive matrix resin and depositing, e.g. electrostatically depositing, a substantially uniform thickness layer of the particles on the reinforcing fibers to thereby provide a uniform thickness matrix of such powder or particles. Alternatively, a uniform thickness matrix of such amine-modified nylon, the polymer is plasma deposited or electrostatically deposited on the reinforcing fibers.

The nylon polymeric adhesive matrix of the present invention may be produced by a process wherein a low moisture absorbing Nylon 12 polymer or Nylon 11 polymer is mixed with a blowing agent, melted and then proceeds through an extruder to a shaping die, which is preferably an annular extrusion die. Such a process is described in co-pending U.S. Patent Application Serial No. 10/350,707, filed on January 24, 2003. The nylon extrudate is attenuated (oriented) as it passes over the expander ring and the stereo reticulated polymeric adhesive matrix is extended in both the machine and cross-machine direction.

The polymeric adhesive matrix of the present invention is formed from a thermoplastic, low moisture-absorbing nylon polymer or low moisture-absorbing polymer blend. The polymeric matrix of the present invention may be utilized in the manufacture of resin-impregnated composite laminates by placing the polymeric adhesive matrix between two layers of reinforcing fibers. More layers can be built up by adding more adhesive matrix layers between more reinforcing fiber layers. After placement and layering of the reinforcing fibers layers and the polymeric adhesive matrix, the reinforcing fiber layer(s) are infused with a crosslinking resin, such as an epoxy or polyimide.

This multi-layer composite laminate can be produced in several ways. In one such process, a tow, web or fabric of reinforcing fibers may be formed and the polymeric adhesive matrix may be placed in contact with the reinforcing fibers. Slight heat may be applied sufficient to make the adhesive matrix tacky and cause it to stick to the reinforcing fibers. The polymeric adhesive matrix acts as both an energy deflector and an energy absorber during impact, and also provides a mechanism to hold the reinforcing fibers together. It is believed that maintaining the polymeric matrix without extensive melting into the reinforcing fibers is an advantage. This keeps the polymeric adhesive matrix close to its original shape and maintains a three-dimensional structure, which allows better energy deflection and reduces the contact area between the adhesive matrix and the reinforcing fibers. This reduced contact area contributes to allowing the subsequent binder resin infusion to distribute more easily throughout the reinforcing fibers. Such a process is shown in Figure 2 below.

In the case of a polymeric adhesive matrix that is a nonwoven web, maintenance of the three-dimensional structure and the original fiber cross sections can be provided by using a sheath-core polymer system of two polymers having different melting points. This allows positioning the polymeric web in contact with the reinforcing fibers without melting of the fiber structure. Another method of accomplishing this objective is to blend the base nylon polymer of the polymeric matrix with at least five (5) and up to forty (40) weight percent of a compatible lower melting point thermoplastic polymer. This provides a lower tack point during the initial fixing of the polymeric adhesive matrix to the reinforcing fibers, leaving the majority of the polymeric matrix un-melted. Another method for accomplishing this is to surface coat either the polymeric adhesive matrix, e.g. a nonwoven web, or the reinforcing fibers with a tackifier to hold the nonwoven web and the reinforcing fibers in place, while maintaining the original integrity and three-dimensional structure of the nonwoven web and the original cross section of the fibers comprising the nonwoven web.

### EXAMPLES

### EXAMPLE 1

### PRE-LAMINATION OF UNIAXIAL CARBON FIBER ASSEMBLY USING NYLON 12 BASED SELF-BONDED FABRIC

Figure 2 is an illustration of the pre-lamination process. Reinforcing carbon fibers are supplied from a beam, separated by a comb to distribute the filaments evenly across the width of 16 inches into a tape-assembly of loose fibers. The yarn contains 700 filaments at 10 denier per filament (15-20 yarns per inch). The tape is pulled, at a line speed of about 20 feet per minute by the conveyor belt of the bonder and onto a winder. Prior to entering the bonder, which is at a temperature of 310 °F, the carbon fiber assembly is contacted by a polymeric.

In a second operation, cut sections of the pre-laminated composite are layered so that the reinforcing carbon fibers are aligned at controlled angles to each other to form the desired lay-up. These layer lay-ups are placed into a molding envelope having a contoured surface and a flexible membrane encasing the lay-up. Fittings are provided to pull a vacuum through the cross section of the layers comprising the lay-up, and causing a liquid binder epoxy resin to penetrate the reinforcing carbon fibers. Heat is optionally applied to reduce binder resin viscosity, facilitate penetration of the reinforcing fibers lay-up, remove entrapped air and facilitate binder resin curing.

### EXAMPLE 2

### LAMINATE PRODUCTION WITH NYLON 12 POLYMER BLEND WEB RFE-POLYMERIC ADHESIVE WEB PRODUCTION

| | |
|---|---|
| Raw Material: | |
| Nylon 12 | -90 parts (-NH3 terminated) |
| Nylon Terpolymer | -10 parts |
| Type: | (Nylon 12, Nylon 6-6, Nylon 6) |
| Composition: | 50/25/25 - parts by weight |
| Mixing: | Raw materials are dry-blended in a Tilted Drum Blender for 20 minutes. |
| Extrusion System: | Rotational Fabric Extrusion, Shown in Figure 1 |
| Winder: | Standard textile winder |
| Extruder: | 2-½ -inch standard single-screw extruder |
| Die Type: | Radial, 16 spinnerets |
| Quench: | Radial (ambient air), to accommodate the die |
| Nip Roll: | Pneumatic nip roll |
| Winder: | Standard textile winder |

The freshly mixed blend of raw material is fed into the hopper of a six temperature zone extruder, which is set at a temperature profile to melt the polymer to a melt temperature of about 500°F. Filaments are extruded from the extruder through a rotating die revolving at 500 to 3000 rotations per minute, with simultaneous air quenching, to form a self-bonded nonwoven web having a substantial fiber alignment that is about 43 degrees off the machine direction of the web. The initial web is tubular, but as the web proceeds downstream, it is collapsed into a flat, two-ply web. The final web is 66-inches wide and it is rolled up on a winder.

### Extrusion Conditions:

| Temperature [°F] : | |
|---|---|
| Zone-1 | 300 |
| Zone-2 | 325 |
| Zone-3 | 375 |
| Zone-4 | 435 |
| Zone-5 | 520 |
| Zone-6 | 520 |
| Die-Amps: | 7.2 |
| Quench [33 in-water]: | 33 |
| Die Rotation [rpm]: | 1700 |
| Pressure [psi]: | 1000 |
| Speed [ft/min]: | 50 |
| Basis Weight [osy]: | 0.40 |
| Extrusion Rate [Lb/hr/hole]: | 2.0 |

### EXAMPLE 3

### LAMINATE PRODUCTION WITH UNBLENDED NYLON 12

The procedure of Example 2 is repeated except that the polymeric adhesive web consists of pure amine-modified Nylon 12.

### EXAMPLE 4

### WEB APPLIED TO A WIDTH OF BEAMED CARBON FIBERS

Continuous filament carbon fibers are beamed (pre-wound-with carbon yarns together across the width of a shaft about 15-20 yarns per inch, 500 -1,000 filaments per yarn). A Nylon 12/Nylon Terpolymer blend that is blended with 4% Versamid ® polyamide is extruded at a temperature of 340°F using the process disclosed in co -pending U.S. Patent Application Serial No. 10/350,707, filed on January 24, 2003 , as follows:

| | |
|---|---|
| Raw Material: | |
| Nylon 12 | -90 parts |
| Nylon Terpolymer -12,6-6,6 | -10 parts |
| Versamid® polyamide | -4% of polymer content |
| Processing Aid: | -8 parts |
| Blowing agent: | |
| Azodicarbonamide - | -1.25%, based on the weight of polymer and processing aid |
| Mixing: | Raw material and blowing agent are dry-blended in a drum-mixer for 20 minutes. |
| Extruder: | 1¼ -inch standard single-screw extruder |
| Die Type: | Radial, having an extrusion slot diameter of 8.0 inches |
| Quench: | Radial (ambient air), to accommodate the die |
| Expander Roll: | Diameter of 26.9 inches |
| Nip Roll: | Pneumatic nip roll |
| Winder: | Standard textile winder |

### Details of Web Production:

The freshly mixed blend of raw material is fed into the hopper of the extruder, which is set at a temperature profile to melt the polymer to a melt temperature of about 340°F. A foamed extrudate is extruded from the radial die with simultaneous air quenching to form a stereoreticulated extrudate that is further developed while expanding over a 26-inch diameter expansion ring to form a tubular web. The web proceeds downstream, and is collapsed into a flat, two-ply web. The final, stereoreticulated web is 32-inches wide and it is rolled-up on a winder.

### Extrusion Conditions:

| | |
|---|---|
| Extrusion temperature [°F]: | 345 |
| Adapter temperature: | 350 |
| Die/lip temperature: | 350 |
| Screw speed [rpm]: | 55 |
| Winder Speed [ft/min]: | 22 |
| Basis Weight of resulting web [gm/meter²]: | 14-17 |

The Nylon 12-based extruded web is attenuated (oriented) as it passes over an expander ring and the stereo reticulated polymeric adhesive Nylon 12-based matrix is extended in both the machine and cross -machine direction. The polymeric adhesive non -woven web is then brought into contact with both sides of the width of carbon fibers, as shown in Figure 2. The combined layers are then heated to about 310°F and mild pressure is applied, but the polymeric adhesive web maintains a part of its three -dimensional stru ctural integrity. The composite laminate is then wound on a roll for subsequent layering in future operations.

### EXAMPLE 5

Nylon 11 that is blended with 4 weight percent Versamid® polyamide is extruded as a polymeric adhesive web under the same conditions a Example 1. The polymeric adhesive web is then utilized to form a carbon fiber composite laminate- under the same conditions as Example 1.

### EXAMPLE 6

A 50/50 weight percent Nylon 11/Nylon 12 blend that is blended with 4 weight percent Versamid® polyamide is extruded as a polymeric adhesive web under the same conditions a Example 1. The polymeric adhesive web is then utilized to form a carbon fiber composite laminate under the same conditions as Example 1.

### EXAMPLE 7

### FABRIC COATING AND PADDING

To improve chemical affinity of Nylon 12 polymer blends comprising the fibers of self-bonded adhesive fabrics, an amine additive is dissolved into a viscous solution and coated onto the surface of fibers comprising a nonwoven fabric. The equipment used in this example is illustrated in Figure 3. In this process, a self-bonded adhesive fabric is fed from a supply roll, over a guide roller and into the nip of a padder and coater. The nip pressure controls the coating action. The roll rotation of the nip roll controls the amount of coating weight supplied to the nip. The coated fabric leaves the padder, enters a drying zone and proceeds towards a winder. The winder contains an unwind position for a film let-off.

| | |
|---|---|
| Fabric: | Fabric produced in Example 2 |
| Additive: | |
| Versamid® [Cognis] | polyamide based resin based on dimerized fatty acids and polyamines |
| Solvent treated: | 1-part of additive to 90-part of alcohol |
| Speed, ft/min.: | 50 |
| Weight gain on the fabric: | 1 to 3% |
| Roll Pressure, lb: | 300/60 inch roll length |

### EXAMPLE 8

### RESIN COATED ADHESIVE FABRICS

The equipment and process of Example 7 are used to produce an identical nonwoven polymeric adhesive web, which is then coated with a high viscosity epoxy resin that does not contain curing agents. The product of this procedure is a fabric that stays relatively wet and tacky for as long as it is not cured. For this reason, the web is coated as in Example 3 except that before winding, a thin film is fed between the product roll and the coated fabric to facilitate unwinding in the pre-laminating process. During pre-lamination, the film can stay with the adhesive fabric to form a pre-laminate where the carbon fiber assembly is between two film layers. Of course, in the final assembly, the interleafed film has to be removed.

## Claims

1. A multi-layer laminates comprising at least one layer of a polymeric adhesive matrix consisting essentially of a substantially uniform thickness nonwoven web consisting essentially of continuous filaments traversing the width of the web, said matrix consisting essentially of an amine-terminated polyamide, consisting essentially of an amine-terminated Nylon 12 or amine-terminated Nylon 11 polymer, or blends thereof with at least five (5) and up to forty (40) weight percent of another compatible thermoplastic polymeric material, said polymeric adhesive matrix positioned between a plurality of reinforcing fibrous layers impregnated with a binder resin.

2. The multi-layer laminate of claim 1, wherein the amine-terminated Nylon 12 or amine-terminated Nylon 11 polymer is copolymerized with another nylon polymer.

3. The multi-layer laminate of claim 2, wherein the another nylon polymers is Nylon 610 or Nylon 6,6.

4. The multi-layer laminate of claim 1, wherein the surface of the polymeric adhesive matrix is modified by coating the polymeric adhesive matrix with an gamine modifier.

5. The multi-layer laminate of claim 1, wherein an amine-modified resin is coated on the reinforcing fibers layers to thereby enhance affinity between the binder resin and the polymeric adhesive matrix.

6. The multi-layer laminate of claim 5, containing a substantially uniform thickness layer of a powder or particles of the amine-modified polymeric adhesive matrix on the reinforcing fiber layers.

7. The multi-layer laminate of claim 1, wherein the polymeric adhesive matrix that is a nonwoven web, that is a three-dimensional structure wherein the fiber cross sections comprise a sheath-core polymer system of two polymer having different melting points.

8. The multi-layer laminates of claim 1, wherein the polymeric adhesive matrix comprises at least five (5) and up to forty (40) weight percent of a compatible lower melting point thermoplastic nylon polymer.

9. A process for producing a multi-layer laminates comprising providing at least one layer of a substantially uniform thickness polymeric adhesive matrix positioned between a plurality of reinforcing fibrous layers, wherein the matrix consists essentially of a substantially uniform thickness nonwoven web, wherein the nonwoven web is formed by a self-bonded fiber matrix consisting essentially of continuous filaments traversing the width of the web, said matrix consisting essentially of a thermoplastic polymeric material consisting of amine terminated Nylon 12 or amine terminated Nylon polymer, or blends thereof, and at least five (5) and up to forty (40) weight percent of another Thermoplastic materials.

10. The process of claim 9, comprising providing a polymeric adhesive matrix wherein the amine-terminated Nylon 12 or amine-terminated Nylon 11 polymers is copolymerized with another nylon polymer.

11. The process of claim 9, comprising providing a polymeric adhesive matrix that is a nonwoven web comprising two polymers having different melting points.

## Patentansprüche

1. Mehrschichtiges Laminat, umfassend wenigstens eine Schicht einer polymeren Haftmatrix, die im Wesentlichen aus einem im Wesentlichen gleichmäßig dicken Vlies besteht, das im Wesentlichen aus kontinuierlichen Filamenten besteht, die die Ausdehnung des Vlieses durchlaufen, wobei die Matrix im Wesentlichen aus einem aminterminierten Polyamid besteht, das im Wesentlichen aus einem aminterminierten Nylon-12- oder aminterminierten Nylon-11-Polymer oder Gemischen davon mit wenigstens fünf (5) und bis zu vierzig (40) Gewichtsprozent an einem weiteren vereinbaren thermoplastischen Polymermaterial besteht, wobei die polymere Haftmatrix zwischen einer Vielzahl von mit einem Bindemittelharz imprägnierten Verstärkungsfaserschichten angeordnet ist.

2. Mehrschichtiges Laminat gemäß Anspruch 1, wobei das aminterminierte Nylon-12- oder aminterminierte Nylon-11-Polymer mit einem weiteren Nylonpolymer copolymerisiert ist.

3. Mehrschichtiges Laminat gemäß Anspruch 2, wobei das weitere Nylonpolymer Nylon 6.10 oder Nylon 6.6 ist.

4. Mehrschichtiges Laminat gemäß Anspruch 1, wobei die Oberfläche der polymeren Haftmatrix durch Beschichten der polymeren Haftmatrix mit einem Aminmodifikator modifiziert ist.

5. Mehrschichtiges Laminat gemäß Anspruch 1, wobei ein aminmodifiziertes Harz auf die Verstärkungsfaserschichten geschichtet ist, um die Affinität zwischen dem Bindemittelharz und der polymeren Haftmatrix zu erhöhen.

6. Mehrschichtiges Laminat gemäß Anspruch 5, das eine im Wesentlichen gleichmäßig dicke Schicht aus einem Pulver oder Partikeln der aminmodifizierten Haftmatrix auf den Verstärkungsfaserschichten enthält.

7. Mehrschichtiges Laminat gemäß Anspruch 1, wobei die polymere Haftmatrix ein Vlies ist, das eine dreidimensionale Struktur aufweist, worin die Faserquerschnitte ein Hülle-Kern-Polymersystem aus zwei Polymeren mit unterschiedlichen Schmelzpunkten umfassen.

8. Mehrschichtiges Laminat gemäß Anspruch 1, wobei die polymere Haftmatrix wenigstens fünf (5) und bis zu vierzig (40) Gewichtsprozent an einem vereinbaren thermoplastischen Nylonpolymer mit niedrigerem Schmelzpunkt umfasst.

9. Verfahren zum Herstellen eines mehrschichtigen Laminats, umfassend Bereitstellen wenigstens einer Schicht einer im Wesentlichen gleichmäßig dicken polymeren Haftmatrix, die zwischen einer Vielzahl von Verstärkungsfaserschichten angeordnet ist, wobei die Matrix im Wesentlichen aus einem im Wesentlichen gleichmäßig dicken Vlies besteht, wobei das Vlies von einer selbstbindenden Fasermatrix gebildet ist, die im Wesentlichen aus kontinuierlichen Filamenten besteht, die die Ausdehnung des Vlieses durchlaufen, wobei die Matrix im Wesentlichen aus einem thermoplastischen Polymermaterial besteht, das im Wesentlichen aus aminterminiertem Nylon-12- oder aminterminiertem Nylon-Polymer oder Gemischen davon und wenigstens fünf (5) und bis zu vierzig (40) Gewichtsprozent an einem weiteren thermoplastischen Material besteht.

10. Verfahren gemäß Anspruch 9, umfassend Bereitstellen einer polymeren Haftmatrix, wobei das aminterminierte Nylon-12- oder aminterminierte Nylon-11-Polymer mit einem weiteren Nylonpolymer copolymerisiert ist.

11. Verfahren gemäß Anspruch 9, umfassend Bereitstellen einer polymeren Haftmatrix, die ein Vlies ist, das zwei Polymere mit unterschiedlichen Schmelzpunkten umfasst.

## Revendications

1. Laminé multicouche comprenant au moins une couche d'une matrice adhésive polymère se composant essentiellement d'une toile non tissée d'épaisseur sensiblement uniforme se composant essentiellement de filaments continus traversant la largeur de la toile, ladite matrice se composant essentiellement d'un polyamide à terminaison amine, se composant essentiellement d'un polymère de nylon 12 à terminaison amine ou de nylon 11 à terminaison amine ou de mélanges de ceux-ci avec au moins cinq (5) et jusqu'à quarante (40) pour cent en poids d'un autre matériau polymère thermoplastique compatible, ladite matrice adhésive polymère étant positionnée entre une pluralité de couches fibreuses de renforcement imprégnées d'une résine liante.

2. Laminé multicouche selon la revendication 1, dans lequel le polymère de nylon 12 à terminaison amine ou de nylon 11 à terminaison amine est copolymérisé avec un autre polymère de nylon.

3. Laminé multicouche selon la revendication 2, dans lequel l'autre polymère de nylon est du nylon 6, 10 ou du nylon 6, 6.

4. Laminé multicouche selon la revendication 1, dans lequel la surface de la matrice adhésive polymère est modifiée par l'enduit de la matrice adhésive polymère avec un modificateur d'amine.

5. Laminé multicouche selon la revendication 1, dans lequel une résine à modification d'amine est enduite sur les couches de fibres de renforcement pour améliorer de ce fait une affinité entre la résine liante et la matrice adhésive polymère.

6. Laminé multicouche selon la revendication 5, contenant une couche d'épaisseur sensiblement uniforme d'une poudre ou de particules de la matrice adhésive polymère à modification d'amine sur les couches de fibres de renforcement.

7. Laminé multicouche selon la revendication 1, dans lequel la matrice adhésive polymère qui est une toile non tissée est une structure tridimensionnelle dans laquelle les coupes transversales de fibres comprennent un système polymère gaine-noyau de deux polymères présentant des points de fusion différents.

8. Laminé multicouche selon la revendication 1, dans lequel la matrice adhésive polymère comprend au moins cinq (5) et jusqu'à quarante (40) pour cent en poids d'un polymère de nylon thermoplastique à point de fusion inférieur compatible.

9. Procédé de production d'un laminé multicouche comprenant la fourniture d'au moins une couche d'une matrice adhésive polymère d'une épaisseur sensiblement uniforme positionnée entre une pluralité de couches fibreuses de renforcement, dans lequel la matrice se compose essentiellement d'une toile non tissée d'épaisseur sensiblement uniforme, dans lequel la toile non tissée est formée par une matrice de fibres auto-liées se composant essentiellement de filaments continus traversant la largeur de la toile, ladite matrice se composant essentiellement d'un matériau polymère thermoplastique se composant d'un polymère de nylon 12 à terminaison amine ou de nylon 11 à terminaison amine ou de mélanges de ceux-ci et d'au moins cinq (5) et jusqu'à quarante (40) pour cent en poids d'un autre matériau thermoplastique.

10. Procédé selon la revendication 9, comprenant la fourniture d'une matrice adhésive polymère dans lequel le polymère de nylon 12 à terminaison amine ou de nylon 11 à terminaison amine est copolymérisé avec un autre polymère de nylon.

11. Procédé selon la revendication 9, comprenant la fourniture d'une matrice adhésive polymère qui est une toile non tissée comprenant deux polymères ayant des points de fusion différents.
